# DEMANDE DE BREVET EUROPEEN

(11) **EP 2 581 706 A1**
(43) Date de publication de la demande: **17.04.2013**
(21) Numéro de dépôt: 12187569.4
(22) Date de dépôt: 08.10.2012
(51) Int. Cl.: G01C 23/00, B64D 43/00, G08B 29/02, G08G 5/00, G06F 11/07, G06F 3/14

(54) **Procédé de réinitialisation rapide pour dispositif de visualisation de planche de bord**

(30) Priorité: 14.10.2011 FR 1103142
(71) Demandeur: Thales, 92200 Neuilly Sur Seine (FR)
(72) Inventeur: Chabot, Philippe, 33160 ST AUBIN DE MEDOC (FR); Durieux, Florence, 33600 PESSAC (FR); Lefort, Marc, 33700 MERIGNAC (FR); Sanderson, Gordon, 33700 Merignac (FR)
(74) Mandataire: Bréda, Jean-Marc

(57) **Abrégé**

Le domaine général de l'invention est celui de la gestion des pannes des dispositifs de visualisation utilisés sur aéronefs. Un dispositif de visualisation de planche de bord d'aéronef comprend un ensemble électronique, un logiciel embarqué et un écran de visualisation. Lorsque le dispositif de visualisation détecte une panne survenant après un temps prédéterminé de bon fonctionnement, le procédé de réinitialisation selon l'invention exécute uniquement les tests de vérification du logiciel sans exécuter les tests de vérification de l'ensemble électronique dits « safety tests », aucune présentation spécifique de panne n'étant affichée sur l'écran de visualisation. On réduit ainsi considérablement la durée pendant laquelle le pilote est privé d'informations.

## Description

Le domaine de l'invention est celui des dispositifs de visualisation de planches de bord d'aéronef. L'invention peut cependant s'appliquer à d'autres domaines industriels comportant des postes de commande centralisés comportant un ensemble de dispositifs de visualisation et nécessitant une reconfiguration rapide en cas de panne.

Le système de visualisations des aéronefs demande une forte disponibilité. Ce système comporte plusieurs dispositifs de visualisation disposés sur la planche de bord et différents calculateurs reliés au système avionique de l'appareil. Cet ensemble est complexe et manipule des milliers de paramètres aéronautiques. De plus, il est programmé pour se reconfigurer automatiquement ou manuellement selon les circonstances, ce qui ajoute à la complexité du système.

L'expérience montre que le système avionique peut être sujet à des erreurs provoquant la perte momentanée des informations affichées sur les visualisations et impliquant l'application de procédures complexes par l'équipage et une surcharge de travail importante. Même si la probabilité de ces pannes est très faible, inférieure à 10⁻⁵ par heure de vol, la durée moyenne de cette perte d'informations est de l'ordre de 40 secondes, ce qui, pour un aéronef en vol, est une durée considérable.

L'analyse de ces pannes montre que ces erreurs sont, dans leur grande majorité dues à des défaillances du logiciel. Les pannes impliquant le matériel se produisent dans des circonstances plus exceptionnelles. Les pannes du logiciel révèlent des fonctionnements aux limites n'ayant pas été découverts pendant les phases de tests malgré les tests de robustesse.

Pour remédier à ces pannes, les solutions existantes consistent à provoquer une panne fatale après détection de l'erreur irrécupérable par le logiciel.

Par exemple, dans le cadre de l'interface standardisée selon la norme aéronautique ARINC 653, cela consiste à déclarer un « reset module » qui provoque l'initialisation complète du module matériel et redémarre un test de mise sous tension afin d'assurer que le module peut garantir la l'intégrité du système. Cette procédure peut prendre, comme il a été dit, jusqu'à quarante secondes avant que le pilote ne retrouve une image opérationnelle sur sa ou ses visualisations.

Comme on l'a vu, dans la plupart des pannes, le matériel n'est pas en cause et ce redémarrage associé à un test complet du système n'est pas nécessaire.

L'invention consiste à mettre en place un redémarrage court d'un système de visualisation, inférieur à deux secondes limitant ainsi l'impact de la perte de visualisation vis à vis de l'équipage tout en conservant le même degré de sécurité au système.

Le procédé selon l'invention ne réinitialise que la partie logiciel du système afin de sortir rapidement du défaut détecté et évite ainsi le redémarrage total du système. Après ce redémarrage rapide, si le défaut est toujours présent, on exécute de nouveau un redémarrage court, la réinitialisation étant limitée à trois boucles. Après avoir confirmé trois fois le défaut, on considère que le système est dans un mode de panne confirmée.

Plus précisément, l'invention a pour objet un procédé de réinitialisation d'un dispositif de visualisation de planche de bord d'aéronef comprenant un ensemble électronique, un logiciel embarqué et un écran de visualisation, **caractérisé en ce que**, lorsque le dispositif de visualisation détecte une panne, ladite panne survenant après un temps prédéterminé de bon fonctionnement du dispositif de visualisation, le dispositif de visualisation exécute uniquement une initialisation du logiciel sans exécuter les tests de vérification de l'ensemble électronique dits « test de sécurité du système » ou « safety tests », aucune présentation spécifique de panne n'étant affichée sur l'écran de visualisation.

Avantageusement, l'origine de la panne est enregistrée dans les moyens de mémorisation du dispositif de visualisation.

Avantageusement, lorsqu'une seconde panne survient après une première panne avant un temps prédéterminé de bon fonctionnement du dispositif de visualisation, le dispositif de visualisation exécute la totalité des tests de vérification du logiciel et de l'ensemble électronique, une présentation spécifique de panne étant affichée pendant cette vérification.

Avantageusement :
si les « safety tests » ayant été passés une première fois, le résultat des « safety tests » n'est pas correct, le dispositif de visualisation exécute les « safety tests » une seconde fois,
si, à l'issue de cette seconde exécution, le résultat des « safety tests » n'est pas correct, le dispositif de visualisation exécute les « safety tests » une troisième fois,
si, à l'issue de cette troisième exécution, le résultat des « safety tests » n'est pas correct, le dispositif de visualisation est déclaré en panne, une présentation spécifique de panne étant affichée sur l'écran de visualisation.

Avantageusement, le logiciel est réalisé selon la norme ARINC 653.

L'invention sera mieux comprise et d'autres avantages apparaîtront à la lecture de la description qui va suivre donnée à titre non limitatif et grâce aux figures annexées parmi lesquelles :
La figure 1 représente les différentes étapes du procédé de réinitialisation d'un dispositif de visualisation selon l'art antérieur ;
Les figures 2a, 2b et 2c représentent différentes configurations d'affichage représentatives du bon et du mauvais fonctionnement du dispositif de visualisation ;
La figure 3 représente les différentes étapes du procédé de réinitialisation d'un dispositif de visualisation selon l'invention dans le cas d'une panne unique;
La figure 4 représente les différentes étapes du procédé de réinitialisation d'un dispositif de visualisation selon l'invention dans le cas de deux pannes successives séparées d'une durée supérieure à une durée prédéterminée ;
La figure 5 représente les différentes étapes du procédé de réinitialisation d'un dispositif de visualisation selon l'invention dans le cas de deux pannes séparées d'une durée inférieure à une durée prédéterminée ;
La figure 6 enfin représente les différentes étapes du procédé de réinitialisation d'un dispositif de visualisation selon l'invention dans le cas où les tests de sécurité sont négatifs.

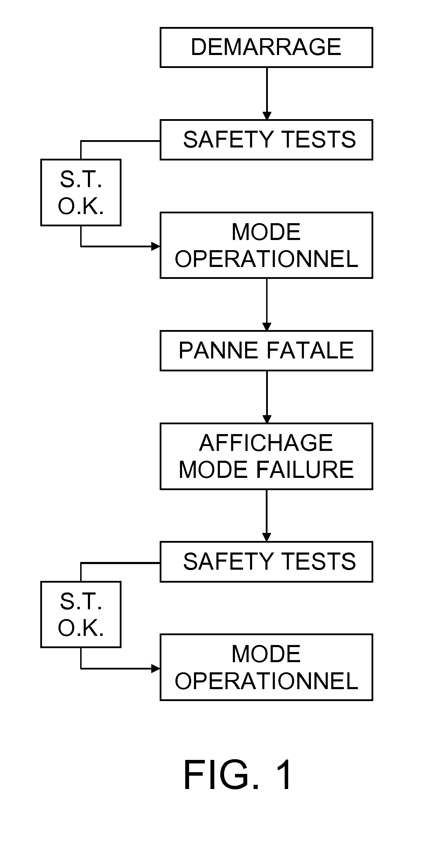

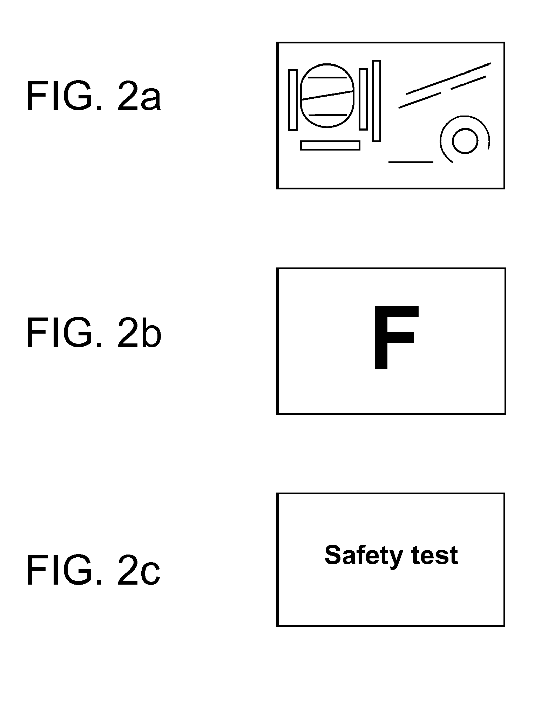

La figure 1 représente les différentes étapes du procédé de gestion d'un dispositif de visualisation selon l'art antérieur. Au démarrage du dispositif de visualisation, le logiciel réalise l'ensemble des tests de sécurité du matériel et du logiciel de l'équipement (Etape : « SAFETY TESTS » de la figure 1). Si les tests de sécurité sont corrects (Etape : « S.T. O.K. » de la figure 1), le dispositif de visualisation est opérationnel, il affiche une représentation graphique des paramètres de pilotage ou de navigation comme on peut le voir sur la figure 2a.

Lorsqu'une panne survient (Etape : « PANNE FATALE » de la figure 1), quelque soit son origine, le dispositif de visualisation passe en « MODE FAILURE », il affiche un symbole ou « pattern » représentant un F majuscule sur fond noir pendant une durée d'environ 10 secondes comme on le voit sur la figure 2b, le logiciel réinitialise la séquence des « SAFETY TESTS », l'affichage passe en mode « SAFETY TESTS » et si les tests de sécurité sont corrects, le dispositif de visualisation retrouve un affichage fonctionnel. Cette séquence de réinitialisation dure environ quarante secondes, durée pendant laquelle le pilote est privé d'affichage.

Comme on l'a dit, le passage complet des tests de sécurité est dans la plupart des pannes inutile dans la mesure où la panne est le plus souvent causé par des fonctionnements aux limites, difficilement détectables par les tests conventionnels de vérification du matériel et n'est révélatrice d'aucun dysfonctionnement grave du matériel.

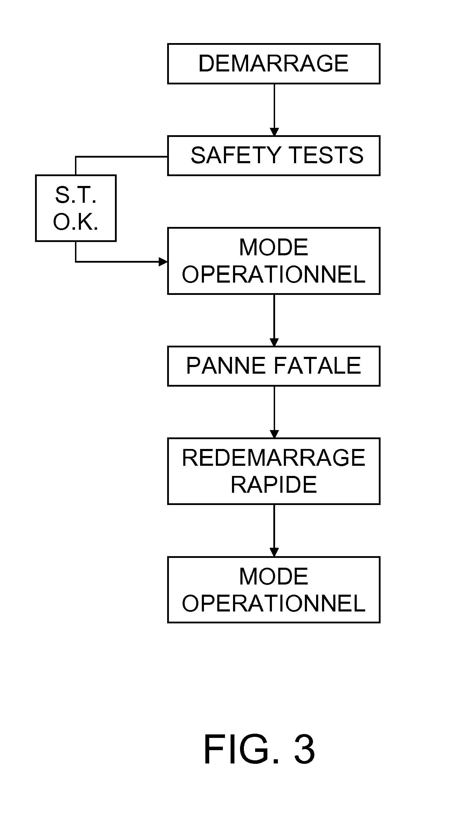

Dans le procédé selon l'invention illustré en figure 3, le diagramme d'état des modes de fonctionnement de la Plateforme logiciel (Operating System et logiciel de base) est modifié afin d'introduire une condition dans le traitement des cas de panne. Au démarrage initial, les « SAFETY TESTS » sont effectués une première fois comme dans le procédé précédent.

Lorsqu'une panne fatale survient, à la première occurrence, seul le module de visualisation est réinitialisé, sans passer les tests de sécurité du matériel. La perte de l'image opérationnelle est alors limitée à deux secondes, ce qui constitue un progrès notable par rapport au procédé précédent. On appele ce mode « Short Reset ».

Cette panne ne fait pas partie des pannes émises vers le calculateur de maintenance ou « CMS », acronyme de « Centralized maintenance System». Elle est enregistrée en mémoire non volatile ou NVM, acronyme signifiant « Non Volatile Memory » dans une zone de la mémoire notée « Shop Data Area » du dispositif de visualisation. L'origine de la panne va pouvoir être ainsi analysée et corrigée lors des phases de maintenance au sol.

Cette seule disposition de réinitialisation serait insuffisante pour assurer la même sécurité que le procédé de réinitialisation de l'art antérieur. Le système pourrait filtrer le défaut, mais le risque serait de ne jamais confirmer la panne, de ne pas détecter les pannes du matériel et de dégrader le niveau de sécurité du système, ce qui n'est pas envisageable dans un système avionique.

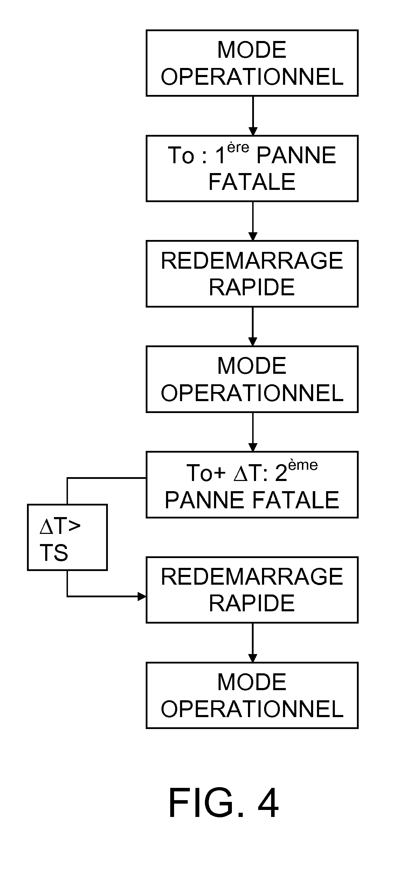

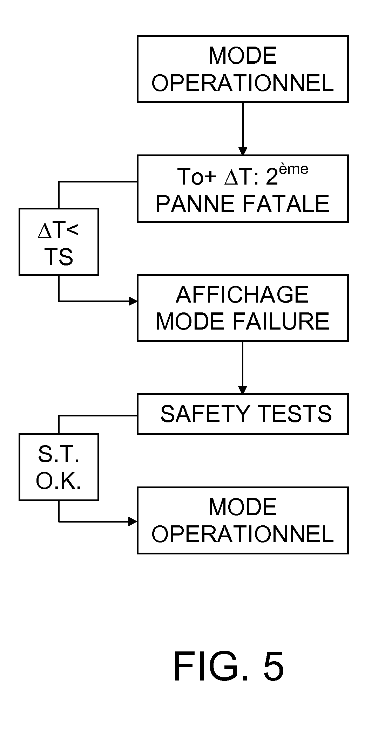

Aussi, comme illustré en figures 4 et 5, si une seconde panne intervient après une première panne, deux cas de figure se présentent. Dans un premier cas illustré en figure 4, la seconde panne intervient au-delà d'une durée prédéterminée TS, le redémarrage rapide, le « Short Reset » est autorisé, l'image opérationnelle est à nouveau disponible en moins de deux secondes.

Dans un second cas illustré en figure 5, si la seconde panne intervient en-deçà de ladite durée prédéterminée TS, le redémarrage rapide n'est plus autorisé. La plateforme logiciel réactive le « MODE FAILURE » configuré par l'application. Le pattern « F » est affiché pendant dix secondes, puis le mode Failure demande le mode Opérationnel avec un passage inconditionnel des « safety tests ».

A titre d'exemple, la durée prédéterminée TS peut être de l'ordre d'une minute. Cette durée peut être configurable selon le système avionique.

Cette solution permet au système de se réinitialiser rapidement tout en conservant le même niveau de sécurité que précédemment. En effet, si la panne est due à une panne du matériel ou « hardware », elle va se reproduire rapidement et va conduire le logiciel à demander l'exécution des safety tests qui permettront de confirmer cette panne hardware. Si la panne est d'origine logicielle, non découverte pendant les campagnes de test de conformité, la réinitialisation va permettre au logiciel de retrouver un environnement non dégradé. Le logiciel va poursuivre de façon nominale son exécution et assurer un affichage opérationnel pendant la quasi-totalité du vol.

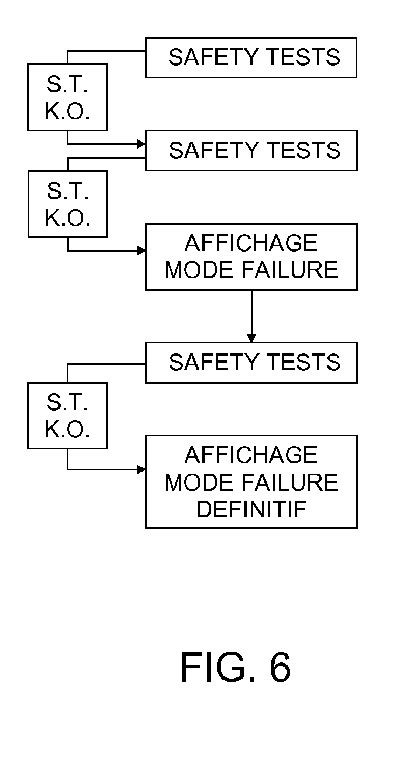

Dans ce qui précède, les tests de sécurité sont toujours passés avec succès, la figure 6 illustre le cas où le résultat des « safety tests » n'est pas satisfaisant, symbolisé par l'étape « S.T. K.O. » sur cette figure. Dans le cas où les tests de sécurité ne sont pas satisfaisants une première fois, ils sont exécutés une seconde fois et dans le cas où ils ne sont toujours pas satisfaisants, une troisième fois. A la troisième fois, le dispositif de visualisation est déclaré en panne. Le mode « Failure » est affiché définitivement sur l'écran de visualisation.

Le procédé selon l'invention s'applique tout particulièrement aux systèmes avioniques fonctionnant selon la norme ARINC 653 intitulée « Avionics Application Software Interface ».

## Revendications

1. Procédé de réinitialisation d'un dispositif de visualisation de planche de bord d'aéronef comprenant un ensemble électronique, un logiciel embarqué et un écran de visualisation, **caractérisé en ce que**, lorsque le dispositif de visualisation détecte une panne, ladite panne survenant après un temps prédéterminé de bon fonctionnement du dispositif de visualisation, le dispositif de visualisation exécute uniquement les tests de vérification du logiciel sans exécuter les tests de vérification de l'ensemble électronique dits « safety test », aucune présentation spécifique de panne n'étant affichée sur l'écran de visualisation.

2. Procédé de réinitialisation d'un dispositif de visualisation selon la revendication 1, **caractérisé en ce que** l'origine de la panne est enregistré dans les moyens de mémorisation du dispositif de visualisation.

3. Procédé de réinitialisation d'un dispositif de visualisation selon la revendication 1, **caractérisé en ce que**, lorsqu'une seconde panne survient après une première panne avant un temps prédéterminé de bon fonctionnement du dispositif de visualisation, le dispositif de visualisation exécute la totalité des tests de vérification du logiciel et de l'ensemble électronique, une présentation spécifique de panne étant affichée pendant cette vérification.

4. Procédé de réinitialisation d'un dispositif de visualisation selon l'une des revendications précédentes, **caractérisé en ce que**,
si, les « safety tests ayant été passé une première fois, le résultat des « safety tests » n'est pas correct, le dispositif de visualisation exécute les « safety tests » une seconde fois,
si, à l'issue de cette seconde exécution, le résultat des « safety tests » n'est pas correct, le dispositif de visualisation exécute les « safety tests » une troisième fois,
si, à l'issue de cette troisième exécution, le résultat des « safety tests » n'est pas correct, le dispositif de visualisation est déclaré en panne, une présentation spécifique de panne étant affichée sur l'écran de visualisation.

5. Procédé de réinitialisation d'un dispositif de visualisation selon l'une des revendications précédentes, **caractérisé en ce que** le logiciel est réalisé selon la norme ARINC 653.
